# EUROPEAN PATENT APPLICATION

(11) **EP 4 645 916 A1**
(43) Date of publication of application: **05.11.2025**
(21) Application number: 22969774.3
(22) Date of filing: 30.12.2022
(51) Int. Cl.: H04W 4/12

(54) **CONFIGURATION METHOD AND APPARATUS BASED ON PERCEPTION SCENARIO, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN)
(74) Representative: Taor, Simon Edward William
(86) International application number: PCT/CN2022/143912
(87) International publication number: WO 2024/138629

(57) **Abstract**

The present application relates to the technical field of perception. Disclosed are a configuration method and apparatus based on a perception scenario, and a device and a storage medium. The method is executed by a first node, and comprises: sending configuration information of perception feedback, wherein the configuration information of the perception feedback is used for configuring at least one of a feedback area and feedback quantity precision of when a second node sends the perception feedback; and parsing the perception feedback according to the configuration information of the perception feedback. By means of configuring the perception feedback, data formats of the perception feedback between the first node and the second node are unified, thereby ensuring the correctness of the perception feedback.

## Description

### TECHNICAL FIELD

Embodiments of the disclosure relate to the technical field of sensing, and in particular to a configuration method and apparatus based on a sensing scenario, a device, and a storage medium.

### BACKGROUND

Sensing refers to a technology for detecting parameters of a physical environment by using radio waves, so as to achieve environmental sensing such as target positioning, motion recognition, and imaging. In a sensing scenario, a sensing control node controls the sensing scenario, for example, by assigning a sensing task to a sensing node. After performing the sensing, the sensing node informs the sensing control node of a sensing result through sensing feedback.

In the related art, one approach for the sensing feedback is a point cloud, that is, a set of points in a specific coordinate system. Each point in the point cloud includes a coordinate, an intensity, a time and other information, that is, the points in the point cloud have a certain data format. In case that a same node both triggers and performs sensing, sensing data are processed by the same node, so there is no need to standardize a format of the point cloud.

However, in case that the sensing control node and the sensing node are different nodes, if there is no unified data format between different nodes, the sensing feedback cannot be correctly parsed, which is a problem that needs to be solved.

### SUMMARY

Embodiments of the disclosure provide a configuration method and apparatus based on a sensing scenario, a device, and a storage medium. The technical solutions are as follows.

In an aspect of the embodiments of the disclosure, a configuration method based on a sensing scenario is provided, which is performed by a first node, and includes the following operations.

A configuration information for sensing feedback is transmitted. The configuration information for the sensing feedback is used for configuring at least one of a feedback region or a feedback quantity precision for transmitting the sensing feedback by a second node.

The sensing feedback is parsed based on the configuration information for the sensing feedback.

In an aspect of the embodiments of the disclosure, a configuration method based on a sensing scenario is provided, which is performed by a second node, and includes the following operations.

A configuration information for sensing feedback is received. The configuration information for the sensing feedback is used for configuring at least one of a feedback region or a feedback quantity precision for transmitting the sensing feedback by the second node.

The sensing feedback is transmitted based on the configuration information for the sensing feedback.

In an aspect of the embodiments of the disclosure, a configuration apparatus based on a sensing scenario is provided, which includes a transmitting module and a parsing module.

The transmitting module is configured to transmit a configuration information for sensing feedback. The configuration information for the sensing feedback is used for configuring at least one of a feedback region or a feedback quantity precision for transmitting the sensing feedback by a second node.

The parsing module is configured to parse the sensing feedback based on the configuration information for the sensing feedback.

In an aspect of the embodiments of the disclosure, a configuration apparatus based on a sensing scenario is provided, which includes a receiving module and a transmitting module.

The receiving module is configured to receive a configuration information for sensing feedback. The configuration information for the sensing feedback is used for configuring at least one of a feedback region or a feedback quantity precision for transmitting the sensing feedback by a second node.

The transmitting module is configured to transmit the sensing feedback based on the configuration information for the sensing feedback.

In an aspect of the embodiments of the disclosure, a sensing device is provided, which includes a transceiver and a processor connected to the transceiver.

The transceiver is configured to transmit a configuration information for sensing feedback. The configuration information for the sensing feedback is used for configuring at least one of a feedback region or a feedback quantity precision for transmitting the sensing feedback by a second node.

The processor is configured to parse the sensing feedback based on the configuration information for the sensing feedback.

In an aspect of the embodiments of the disclosure, a sensing device is provided, which includes a transceiver.

The transceiver is configured to receive a configuration information for sensing feedback. The configuration information for the sensing feedback is used for configuring at least one of a feedback region or a feedback quantity precision for transmitting the sensing feedback by a second node. The transceiver is further configured to transmit the sensing feedback based on the configuration information for the sensing feedback.

In an aspect of the embodiments of the disclosure, a computer-readable storage medium is provided, which stores a computer program. When the computer program is executed by a processor, the processor is caused to implement the above configuration methods based on the sensing scenario.

In an aspect of the embodiments of the disclosure, a chip is provided, which includes a programmable logic circuit and/or program instructions. The chip is configured to perform the above configuration methods based on the sensing scenario when the chip is in operation.

In an aspect of the embodiments of the disclosure, a computer program product or a computer program is provided, which includes computer instructions stored in a computer-readable storage medium. When the computer instructions are read from the computer-readable storage medium and executed by a processor, the processor is caused to implement the above configuration methods based on the sensing scenario.

The technical solutions provided by the embodiments of the disclosure may bring about the following beneficial effects.

The configuration information for the sensing feedback is transmitted to the second node, and then the sensing feedback is parsed based on the configuration information for the sensing feedback. In this way, the first node and the second node can at least have the same or consistent understanding of the data format of the sensing feedback, which ensures that the first node can correctly parse the sensing feedback, thereby improving a sensing accuracy.

### BRIEF DESCRIPTION OF THE DRAWINGS

In order to more clearly illustrate the technical solutions in the embodiments of the disclosure, the drawings required to be used in the description of the embodiments will be briefly described below. It is obvious that the drawings in the following description illustrate only some embodiments of the disclosure, and other drawings may also be obtained by those of ordinary skill in the art without any creative work according to these drawings.
FIG. 1 is a schematic diagram illustrating different modes of sensing.
FIG. 2 is a block diagram illustrating a sensing system according to an embodiment of the disclosure.
FIG. 3 is a flowchart illustrating a configuration method based on a sensing scenario according to an embodiment of the disclosure.
FIG. 4 is a schematic diagram illustrating a feedback region according to an embodiment of the disclosure.
FIG. 5 is a schematic diagram illustrating a feedback region according to an embodiment of the disclosure.
FIG. 6 is a schematic diagram illustrating a feedback region according to an embodiment of the disclosure.
FIG. 7 is a schematic diagram illustrating a feedback region according to an embodiment of the disclosure.
FIG. 8 is a flowchart illustrating a configuration method based on a sensing scenario according to an embodiment of the disclosure.
FIG. 9 is a flowchart illustrating a configuration method based on a sensing scenario according to an embodiment of the disclosure.
FIG. 10 is a flowchart illustrating a configuration method based on a sensing scenario according to an embodiment of the disclosure.
FIG. 11 is a structural block diagram of a configuration apparatus based on a sensing scenario according to an embodiment of the disclosure.
FIG. 12 is a structural block diagram of a configuration apparatus based on a sensing scenario according to an embodiment of the disclosure.
FIG. 13 is a schematic structural diagram of a sensing device according to an embodiment of the disclosure.

### DETAILED DESCRIPTION

For clearer descriptions of the objects, technical solutions, and advantages of the disclosure, implementations of the disclosure are further described in detail below with reference to the accompanying drawings.

A network architecture and service scenario are described in the embodiments of the disclosure to more clearly illustrate the technical solutions in the embodiments of the disclosure, and do not intend to limit the technical solutions provided by the embodiments of the disclosure. One of ordinary skill in the art will understand that, with an evolution of the network architecture and an emergence of a new service scenario, the technical solutions provided in the embodiments of the disclosure are also applicable to similar technical problems.

Prior to introducing the technical solutions of the disclosure, some background technical knowledge involved in the disclosure is first introduced and explained. The following related technologies, as optional solutions, may be arbitrarily combined with the technical solutions in the embodiments of the disclosure, all of which fall within the scope of protection of the embodiments of the disclosure. The embodiments of the disclosure include at least part of following content.

Sensing refers to a technology for detecting parameters of a physical environment by using radio waves, so as to achieve environmental sensing such as target positioning, motion recognition, and imaging. The nodes involved in sensing include: a sensing transmitting node, a sensing receiving node, a sensing node and a sensing control node.

The sensing transmitting node is a node for transmitting a sensing signal.

The sensing receiving node is a node for receiving the sensing signal.

The sensing transmitting node and the sensing receiving node are collectively referred to as the sensing nodes, i.e., a node for performing sensing.

The sensing control node is a node for controlling a sensing task. The sensing control node configures the sensing task for the sensing node, and the sensing node feeds back a sensing result to the sensing control node after performing the sensing. In some embodiments of the disclosure, a sensing trigger node may be regarded as the sensing control node.

Under a technological development trend of a gradual overlap between a spectrum for wireless communication and a spectrum for sensing, a wireless communication function and a sensing function are integrated into a communication and sensing integration technology, and a wireless resource for the wireless communication may be used to achieve the sensing function. That is, a widely deployed cellular network may be used to achieve a sensing service in a larger region, a base station and multiple terminals may be used for joint sensing to achieve a higher sensing accuracy, and a hardware module for the wireless communication may be reused to achieve the sensing function, so as to reduce a cost. In short, the communication and sensing integration technology enables a future wireless communication system to have a sensing capability, and provides a foundation for the development of future services such as a smart transportation, a smart city, a smart factory, and a drone.

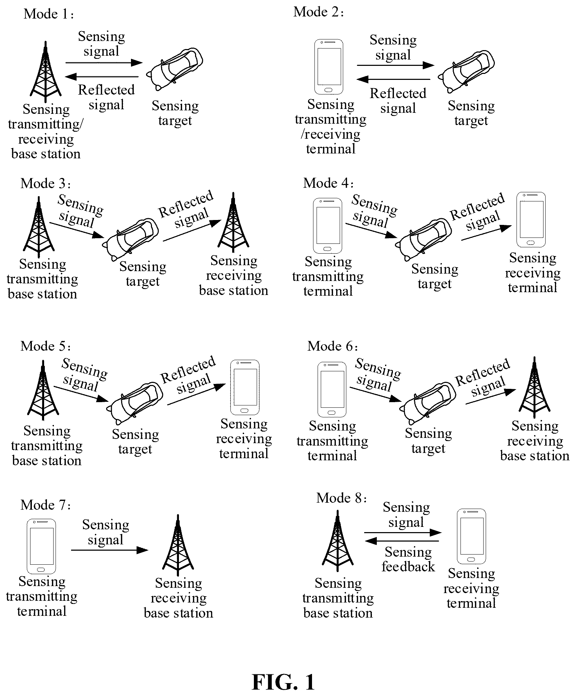

Sensing may be achieved through at least one of eight modes. FIG. 1 illustrates the eight modes for sensing.

Mode 1: base station self-transmitting and self-receiving sensing. In mode 1, the sensing transmitting node and the sensing receiving node are a same base station. That is, the base station transmits the sensing signal to a sensing target, and after the sensing signal is reflected by the sensing target, the same base station receives the reflected signal (i.e., the sensing signal reflected by the sensing target).

Mode 2: terminal self-transmitting and self-receiving sensing. In mode 2, the sensing transmitting node and the sensing receiving node are a same terminal. That is, the terminal transmits the sensing signal to the sensing target, and after the sensing signal is reflected by the sensing target, the same terminal receives the reflected signal.

Mode 3: base station cooperative sensing. In mode 3, the sensing transmitting node and the sensing receiving node are different base stations. That is, one base station transmits the sensing signal to the sensing target, and after the sensing signal is reflected by the sensing target, another base station receives the reflected signal.

Mode 4: terminal cooperative sensing. In mode 4, the sensing transmitting node and the sensing receiving node are different terminals. That is, one terminal transmits the sensing signal to the sensing target, and after the sensing signal is reflected by the sensing target, another terminal receives the reflected signal.

Mode 5: base station-terminal cooperative sensing. In mode 5, the sensing transmitting node is the base station, and the sensing receiving node is the terminal. That is, the base station transmits the sensing signal to the sensing target, and after the sensing signal is reflected by the sensing target, the terminal receives the reflected signal.

Mode 6: terminal-base station cooperative sensing. In mode 6, the sensing transmitting node is the terminal, and the sensing receiving node is the base station. That is, the terminal transmits the sensing signal to the sensing target, and after the sensing signal is reflected by the sensing target, the base station receives the reflected signal.

Mode 7: the sensing target is the sensing transmitting node. In mode 7, the sensing transmitting node is the terminal, and the sensing receiving node is the base station. Since the sensing target (the terminal) is the sensing transmitting node, the sensing signal is transmitted by the sensing transmitting node (the terminal) to the sensing receiving node (the base station) without reflection, and the base station may directly parse the sensing result after receiving the sensing signal.

Mode 8: the sensing target is the sensing receiving node. In mode 8, the sensing transmitting node is the base station, and the sensing receiving node is the terminal. Since the sensing target (the terminal) is the sensing receiving node, the terminal needs to feed back the sensing result to the base station after receiving the sensing signal, so that the base station may learn the sensing result.

In the eight sensing modes illustrated in FIG. 1, there is only a single sensing node (for example, in mode 1 and mode 2, the single sensing node is both a sensing transmitting node and a sensing receiving node) or a pair of sensing nodes (for example, in mode 3 to mode 8, the sensing transmitting node and the sensing receiving node are different nodes in pairs). However, there are a large number of terminal devices (for example, mobile phones, Internet of Things (IoT) devices, etc.) in a wireless communication system. When there are multiple sensing nodes (i.e., base stations, mobile phones, IoT devices, etc. that may transmit and/or receive sensing signals) around the sensing target, the joint participation of the multiple sensing nodes in sensing will improve the sensing accuracy, meet a more complex sensing service requirement, and provide richer sensing services. When there are multiple sensing nodes in the system, there may exist a sensing control node to control and manage a whole sensing system, so as to improve an efficiency. The sensing control node may be a base station, a terminal, or a core network element.

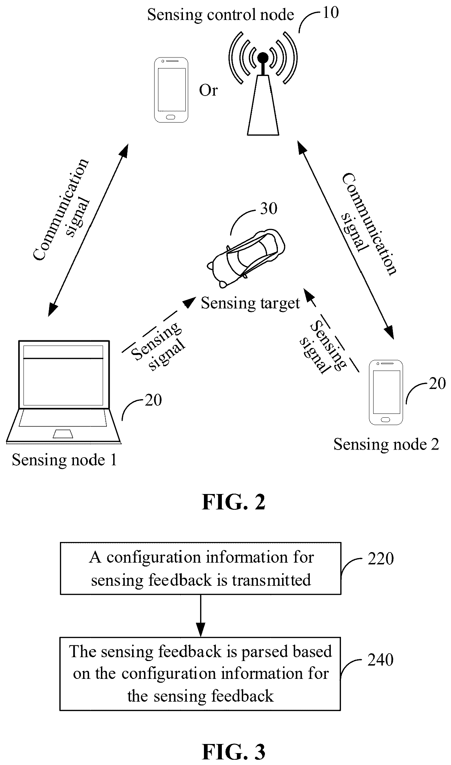

Please refer to FIG. 2, which is a block diagram illustrating a sensing system according to an embodiment of the disclosure. The sensing system may include a sensing control node 10, a sensing node 20, and a sensing target 30.

The sensing control node 10 refers to a node that controls a sensing process, which may be a base station, a terminal, or a core network element. The sensing control node 10 may perform multiple roles in the sensing system, for example, the sensing control node 10 may be the sensing trigger node through which sensing is initiated, configuration of a sensing scenario is set, sensing feedback transmitted by the sensing node is parsed, and/or the like.

The sensing node 20 includes the sensing transmitting node and the sensing receiving node. The sensing node 20 may include the base station, the terminal, the IoT device, various handheld devices with wireless communication capabilities, a vehicle-mounted device, a wearable device, a computing device, or other processing devices connected to a wireless modem, as well as various forms of user equipment, a mobile station (MS), and the like. There may be usually multiple sensing nodes 20, and one or more sensing nodes 20 may be distributed in a region controlled by each sensing control node 10.

The sensing target 30 is a target object to be sensed, and includes a person or an object to be sensed. For example, in case that a sensing application is to monitor an indoor intrusion, the sensing target 30 is an indoor intruder; and in case that the sensing application is to measure a vehicle speed, the sensing target 30 is a target vehicle on the road.

The sensing control node 10 communicates with the sensing node 20 through a communication signal, for example, the sensing control node 10 transmits the sensing task to the sensing node 20, i.e., notifies a sensing configuration, or the sensing node 20 reports the sensing feedback to the sensing control node 10, and the like. After receiving the sensing task assigned by the sensing control node 10, the sensing node 20 senses the sensing target 30 by transmitting or receiving the sensing signal.

An approach in which the sensing node 20 provides the sensing feedback to the sensing control node 10 is a point cloud, that is, a data set of points in a specific coordinate system. A point contains a wealth of information, for example, three-dimensional coordinates X, Y, Z, a color, a classification value, an intensity value, a time, etc., which are not listed here. If the trigger of sensing and execution of sensing are completed by a same node, there is no need to standardize a format of the point cloud. On the one hand, the sensing data are processed in the same node, and it is sufficient that the format of the data is uniformly agreed upon among different processing modules; on the other hand, since there is no need to transmit data between nodes, there is no feedback overhead. However, when the sensing control node (i.e., the sensing trigger node) and the sensing node are two independent nodes, the data format is indefinite. If there is no unified understanding of the data format between the two independent nodes, the feedback cannot be parsed. Further, if a fixed format is used between the two independent nodes, a sensing requirement cannot be adapted, resulting in an inaccurate sensing information or excessive sensing overhead.

The method in the disclosure achieves the unified understanding of the data format of the sensing feedback between the sensing control node and the sensing node by transmitting a configuration for the sensing feedback from the sensing control node (i.e., the sensing trigger node) to the sensing node.

Hereinafter, the technical solutions in the disclosure will be described with reference to several embodiments.

Please refer to FIG. 3, which is a flowchart illustrating a configuration method based on a sensing scenario according to an embodiment of the disclosure. The method is performed by a first node, which may be the sensing control node 10 in the sensing system illustrated in FIG. 2. The method includes the following operations.

At operation 220, a configuration information for sensing feedback is transmitted.

The first node transmits the configuration information for the sensing feedback to a second node. That is, the first node informs the second node of a data type and format to be used when transmitting the sensing feedback. For example, a data content may be a feedback region, a received energy value of a sensing signal, and the like. The data format may be {the feedback region, the received energy value of the sensing signal}, etc. The sensing feedback is used for feeding back a sensing result, or feeding back a measurement result for the sensing signal. The sensing feedback includes one or more feedback information related to the sensing result.

The first node is the sensing control node (i.e., the sensing trigger node) in the sensing scenario, and the second node is the sensing node in the sensing scenario. The first node configures a sensing task (e.g., an indoor intrusion detection, a target location, etc.) to the second node and transmits the configuration information (e.g., the feedback region, a feedback quantity precision, etc.) for the sensing feedback. After the second node performs the sensing, the first node receives the sensing feedback from the second node. The first node may be a core network, a server, a base station, or a terminal.

That is, the first node configures the sensing task to the second node, the second node transmits the sensing signal, the sensing signal is reflected by a sensing target and then received by the second node, and the second node transmits the sensing feedback to the first node. The sensing feedback is used for feeding back the sensing result, and the sensing feedback includes the feedback information related to the sensing result.

In some embodiments, the configuration information for the sensing feedback is used for configuring at least one of a feedback region or a feedback quantity precision for transmitting the sensing feedback by a second node.

The feedback region indicates a region corresponding to a feedback information carried in the sensing feedback. The feedback region may be identified by various approaches, such as a sensing distance R, two-dimensional sensing coordinates (X, Y) or three-dimensional sensing coordinates (X, Y, Z), a delay T or a time difference T, a sensing angle θ, etc.

In some embodiments, the feedback region is in at least one of the following forms:
a spherical region with the first node as a center and a radius of R;
a spatial region in a coordinate system with the first node as an origin, herein the spatial region refers to a region formed by multiple sensing coordinates in a same coordinate system, and the spatial region may be a cube or any irregular spatial geometry;
a fan-shaped open region with the first node as a vertex;
a fan-shaped closed region with the first node as a vertex;
a spherical region with the second node as a center and a radius of R;
a spatial region in a coordinate system with the second node as an origin;
a fan-shaped open region with the second node as a vertex;
a fan-shaped closed region with the second node as a vertex;
a spherical region with a sensing target as a center and a radius of R;
a spatial region in a coordinate system with the sensing target as an origin;
a fan-shaped open region with the sensing target as a vertex;
a fan-shaped closed region with the sensing target as a vertex; or
a spatial region determined based on a time difference between transmitting and receiving of a sensing signal. Herein the spatial region is a region corresponding to the time difference T between the transmitting and receiving of the sensing signal (i.e., a time difference T between a transmitting time T1 and a receiving time T2), or a region corresponding to a channel delay t (i.e., the delay t between time t1 and time t2).

In some embodiments, the feedback region may also be in a form of any combination of the above basic forms. For example, the feedback region is a spatial region with the first node as the center and a radius greater than or equal to R1 and less than R2 (both R1 and R2 are positive numbers and R1 is less than R2). For another example, the feedback region is an intersection region between a fan-shaped open region and another fan-shaped closed region both with the second node as the vertex, and so on. The disclosure does not limit the form of the feedback region.

In some embodiments, the feedback region is represented by at least one of:
coordinates in a coordinate system with the first node as an origin;
coordinates in a coordinate system with the second node as an origin;
coordinates in a reference coordinate system with a reference node as an origin, the reference node being different from the first node and the second node; herein the reference node is an origin of the reference system that is different from the first node and the second node and is selected based on a different sensing scenario, for example, a geodetic coordinate system is selected as the reference coordinate system;
an angle of incidence (or an angle of arrival) with the first node as a vertex;
an angle of departure with the first node as a vertex;
an angle of incidence (or an angle of arrival) with the second node as a vertex;
an angle of departure with the second node as a vertex;
a line between the first node and the second node;
a length value related to a sensing distance;
an angle value related to a sensing angle; or
a transmission delay related to a sensing signal. Herein the transmission delay refers to the time difference T between the transmitting and receiving of the sensing signal (i.e., the time difference T between the transmitting time T1 and the receiving time T2), or the channel delay t (i.e., the delay t between the time t1 and the time t2).

The following examples show several possible representations of the feedback region.
(a) The feedback region is represented by the length value related to the sensing distance, for example, the sensing distance R. The feedback region may be in the form of: the spherical region with the first node as the center and the radius of R, the spherical region with the second node as the center and the radius of R, or the spherical region with the sensing target as the center and the radius of R, and the like.

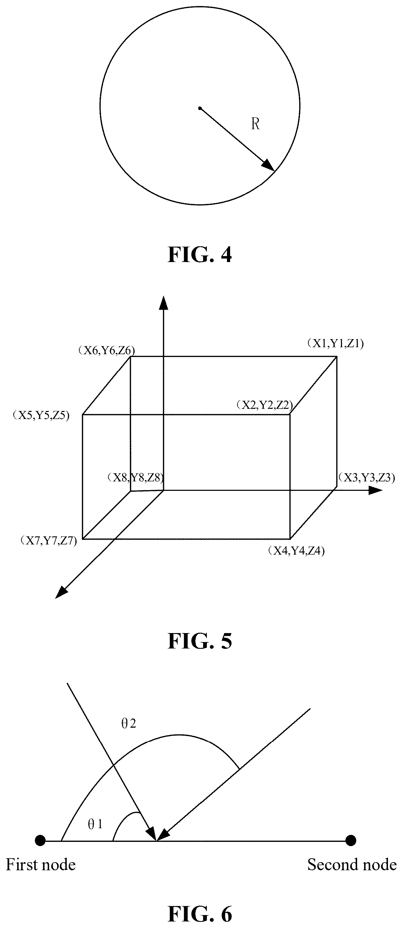

It should be noted that the feedback region represented by the sensing distance R may be a two-dimensional planar region (i.e., a circle) or a three-dimensional spatial region (i.e., a sphere). For example, as illustrated in FIG. 4, the feedback region is a planar circular region with the first node as the center and the radius of R.

(b) The feedback region is represented by coordinates, for example, the coordinates in the coordinate system with the first node as the origin, the coordinates in the coordinate system with the second node as the origin, the coordinates in the reference coordinate system, and the like. The feedback region may be in the form of: the spatial region in the coordinate system with the first node as the origin, the spatial region in the coordinate system with the second node as the origin, or the spatial region in the coordinate system with the sensing target as the origin.

The reference coordinate system is a coordinate system with the reference node as the origin, and the reference node is different from the first node and the second node. For example, the reference coordinate system is the geodetic coordinate system. The disclosure does not limit the selection of the reference coordinate system.

It should be noted that the feedback region represented by the coordinates may be the two-dimensional planar region or the three-dimensional spatial region. For example, the feedback region is a planar region formed by coordinates (X1, Y1), (X2, Y2), (X3, Y3) and (X4, Y4) in the coordinate system with the first node as the origin. For another example, the feedback region is a spatial region formed by coordinates (X1, Y1, Z1), (X2, Y2, Z1), (X3, Y3, Z1), (X4, Y4, Z1), (X1, Y1, Z2), (X2, Y2, Z2), (X3, Y3, Z2), and (X4, Y4, Z2) in the coordinate system with the first node as the origin. For another example, as illustrated in FIG. 5, the feedback region is a spatial region formed by coordinates (X1, Y1, Z1), (X2, Y2, Z2), (X3, Y3, Z3), (X4, Y4, Z4), (X5, Y5, Z5), (X6, Y6, Z6), (X7, Y7, Z7), and (X8, Y8, Z8) in the reference coordinate system.

In some embodiments, in case that absolute values of the X-axis coordinates (e.g., X1, X2, X3, X4) are the same, only an absolute value of X needs to be configured. In case that absolute values of the Y-axis coordinates (e.g. Y1, Y2, Y3, Y4) are the same, only an absolute value of Y needs to be configured. In case that absolute values of the Z-axis coordinates (e.g. Z1, Z2) are the same, only an absolute value of Z needs to be configured.

(c) The feedback region is represented by an angle value related to the sensing angle, for example, the angle of incidence, the angle of arrival, the angle of departure, etc. For example, the information for representing the feedback region may be the angle of incidence (or the angle of arrival) with the first node as the vertex, the angle of departure with the first node as the vertex, the angle of incidence (or the angle of arrival) with the second node as the vertex, or the angle of departure with the second node as the vertex. The feedback region may be in the form of: the fan-shaped open region with the first node as the vertex, the fan-shaped open region with the second node as the vertex, the fan-shaped open region with the sensing target as the vertex, or the like.

It should be noted that the feedback region represented by the angle value may be the two-dimensional planar region or the three-dimensional spatial region. For example, the feedback region is a planar or spatial region with an angle of incidence ranging from θ1 to 02. For another example, as illustrated in FIG. 6, the feedback region is a planar fan-shaped open region with the first node as the vertex and the angle of incidence ranging from θ1 to θ2 with reference to the line between the first node and the second node.

(d) The feedback region is represented by the angle value related to the sensing angle and the length value related to the sensing distance jointly. The feedback region may be in the form of: the fan-shaped closed region with the first node as the vertex, the fan-shaped closed region with the second node as the vertex, or the fan-shaped closed region with the sensing target as the vertex, and the like.

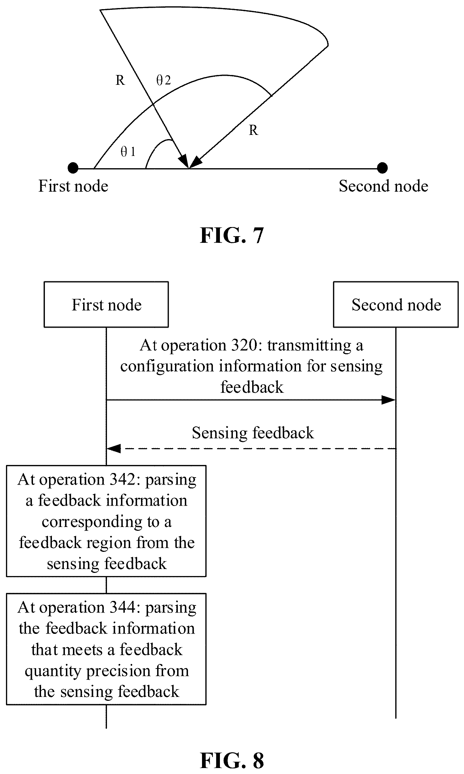

For example, as illustrated in FIG. 7, the feedback region is a planar fan-shaped closed region with the first node as the vertex, the sensing distance R as the radius, and the angle of incidence ranging from θ1 to θ2 with reference to the line between the first node and the second node.

(e) The feedback region is represented by a transmission delay related to the sensing signal. The transmission delay may be the delay t or the time difference T between the transmitting and receiving of the sensing signal. The feedback region may be in the form of: a spatial region determined based on the delay t or a spatial region determined based on the time difference between transmitting and receiving of the sensing signal.

For example, the feedback region is a region corresponding to the delay t read from an estimated channel. For another example, the feedback region is a region corresponding to the time difference T between the transmitting and receiving of the sensing signal.

It should be noted that the feedback region represented by the transmission delay related to the sensing signal may be the three-dimensional spatial region or the two-dimensional planar region, which is not limited in the disclosure.

It should be noted that the examples listed above are only partial examples of the feedback region. The feedback region may be configured using any free combination of the above representations and basic forms, which is not limited in the disclosure.

In some embodiments, the configuration information further carries a unit associated with the feedback region. The unit may be an international standard unit or a user-defined unit. For example, the unit of the length (e.g., the sensing distance) may be a meter, a decimeter, a centimeter, etc.; the unit of the time (e.g., the transmission delay) may be a millisecond, a microsecond, a nanosecond, or a symbol, a subframe, or a sampling interval (i.e., a time between points corresponding to two consecutive sampling pulses), or a user-defined time unit Tc, etc., herein Tc is typically determined by a subcarrier spacing, the number of subcarriers, or a signal bandwidth; the unit of the angle (e.g., the angle of incidence, the angle of departure, etc.) may be a degree (°), π, etc.

In some embodiments, the configuration information further carries a data partitioning granularity in the feedback region. The data partitioning granularity indicates a partitioning granularity of sensing signals or echo signals (i.e., the signals received by the sensing node after reflection) in the feedback region that are combined into a same feedback information for feedback. That is, the data partitioning granularity indicates that one or more data in one partitioning granularity region are combined into the same feedback information for feedback. That is, the feedback region is partitioned into at least one partitioning granularity region based on the data partitioning granularity, and the data in each partitioning granularity region are combined for feedback. For example, if the data partitioning granularity is defined as 10 Tc, the sensing signals or echo signals in an interval of [n, n+10) Tc are combined into a same sensing feedback information for feedback, n being a natural number. For another example, if the data partitioning granularity is defined as 5 cm, the sensing signals or echo signals in an interval of [n, n+5) cm are combined into one sensing feedback information for feedback.

In some embodiments, the method for combining the sensing signals or the echo signals into the same feedback information may include: taking a maximum value of sensing signal values or echo signal values in the interval, or taking a minimum value of the sensing signal values or the echo signal values in the interval, or taking an average value of the sensing signal values or the echo signal values in the interval, or taking a sum of the sensing signal values or the echo signal values in the interval (i.e., a result obtained by adding the sensing signal values or adding the echo signal values in the interval), and so on. The method for combining the sensing signals or the echo signals is not limited in the disclosure.

The feedback quantity precision indicates a precision corresponding to a feedback information carried in the sensing feedback.

The configuration information is related to at least one of: a sensing service requirement or a resource overhead required for the sensing feedback. For example, in case that the sensing application is in an outdoor scenario, the unit of meter or ten of meters may be used, and the feedback region may be 0-2000 meters, that is, the sensing distance is 2000 meters. In case that the sensing application is in an indoor scenario, the unit of decimeter may be used, and the feedback region may be 0-5 meters, that is, the sensing distance is 5 meters. For another example, in order to reduce the resource overhead required for the sensing feedback, the information in the sensing feedback may be represented by index numbers. For example, if energy values {0, 5, 10, 15, 20} correspond to the indices {0, 1, 2, 3, 4} respectively, the feedback information {0, 0, 15, 0, 0, 10, 10, 0, 0, 0} is correspondingly denoted as {0, 0, 3, 0, 0, 2, 2, 0, 0, 0} based on the index numbers.

At operation 240, the sensing feedback is parsed based on the configuration information for the sensing feedback.

After receiving the sensing feedback from the second node, the first node parses the sensing feedback based on the configuration information for the sensing feedback.

In some embodiments, the configuration information for the sensing feedback includes the feedback region. The first node reads data from the sensing feedback and determines the feedback information in the sensing feedback based on the feedback region.

In some embodiments, the configuration information for the sensing feedback includes the feedback quantity precision. The first node reads the data from the sensing feedback and determines the feedback information in the sensing feedback based on the feedback quantity precision.

In some embodiments, the configuration information for the sensing feedback includes the feedback region and the feedback quantity precision. The first node reads the data from the sensing feedback and determines the feedback information in the sensing feedback based on the feedback region and the feedback quantity precision.

In summary, in the technical solutions provided by the embodiments of the disclosure, the configuration information for the sensing feedback is transmitted to the second node that performs the sensing, and then the sensing feedback transmitted by the second node is parsed based on the configuration information for the sensing feedback, so that the data format of the sensing feedback between the first node and the second node is unified, and the first node can obtain a correct sensing feedback result. In the solutions, different parameters may be configured for different sensing tasks. On the basis of the consistent understanding of the information among different nodes, the sensing feedback may also be flexibly configured based on a sensing application scenario and an overhead for the sensing feedback, so that the sensing feedback is more adaptable to the service requirement.

In an alternative embodiment based on FIG. 3, the configuration information for the sensing feedback may be the feedback region or the feedback quantity precision. These two types of information that may be carried in the configuration information for the sensing feedback will be described exemplarily below.

FIG. 4 is a flowchart illustrating a configuration method based on a sensing scenario according to an embodiment of the disclosure. The method may be applied to the sensing system illustrated in FIG. 2 and is performed by the first node, and the first terminal may be the sensing control node (i.e., the sensing trigger node) 10 in the sensing system illustrated in FIG. 2. The method may include the following operations.

At operation 320, a configuration information for sensing feedback is transmitted.

The first node transmits the configuration information for the sensing feedback to a second node. That is, the first node informs the second node of information such as a data type and format to be used when transmitting the sensing feedback. The first node is the sensing control node (i.e., the sensing trigger node) in the sensing scenario, and the second node is the sensing node in the sensing scenario. The first node configures the sensing task to the second node and receives the sensing feedback from the second node.

In some embodiments, the configuration information for the sensing feedback is used for configuring at least one of a feedback region or a feedback quantity precision for transmitting the sensing feedback by the second node. That is, the configuration information for the sensing feedback includes the feedback region. Alternatively, the configuration information for the sensing feedback includes the feedback quantity precision. Alternatively, the configuration information for the sensing feedback includes the feedback region and the feedback quantity precision.

The feedback region and the feedback quantity precision will be described below respectively.
1) The configuration information for the sensing feedback carries the feedback region.

For the description of the feedback region, reference is made to the related description at the operation 220 and will not be repeated here.

In some embodiments, no sensing feedback is provided for a sensing information outside the feedback region, or the sensing information outside the feedback region is mapped to a boundary of the feedback region for the sensing feedback. For example, the feedback region is configured as a region where the sensing distance is from R1 to R2, and the second node detects an echo energy at the position R3, with R3 > R2. In a possible implementation, the second node does not feed back the echo information formed at R3, for example, the energy P. In another possible implementation, the second node maps the information of the energy P to the position R2 for feedback, and in this case, R1/R2 is no longer a definite value, but refers to a region less than or equal to R1/a region greater than or equal to R2.

In some embodiments, the configuration information is related to at least one of: the sensing service requirement or the resource overhead required for the sensing feedback. Different data sensing regions or sensing units or sensing granularities may be configured for different sensing tasks. For example, when the sensing task is to monitor an intruder on a highway, the unit of the meter or ten of meters may be used, and a measurement region may be 0-2000 meters. For another example, when the sensing task is to monitor an indoor intruder, the unit of the meter or decimeter may be used, and the measurement region may be 0-5 meters.

2) The configuration information for the sensing feedback carries the feedback quantity precision.

The feedback quantity precision indicates the precision corresponding to the feedback information carried in the sensing feedback. That is, the feedback quantity precision indicates a smallest unit of the feedback information.

For example, if the feedback quantity precision of the energy in the feedback information is 5 dBm, selectable values of the energy in the feedback information are arranged in an ascending order as: 0 dBm, 5 dBm, 10 dBm, 15 dBm ... 100 dBm. For another example, if the feedback quantity precision of data in the feedback information is 0.01, selectable values of the feedback quantity are arranged in an ascending order as: 0, 0.01, 0.02 ... 1.

In some embodiments, the data in the feedback information may be normalized before the sensing feedback is provided. For example, the second node receives and detects the echo signals, and obtains three values of (2, 3, 5). These values are first converted into (0.2, 0.3, 0.5) through normalization, and then are used for the sensing feedback. Normalization process makes the data comparable among different devices.

In some embodiments, the feedback quantity precision of the data or energy in the feedback information is 0 or 1, i.e. absence or presence. The presence or absence is determined based on the feedback quantity precision using a threshold. If the data is less than the threshold, it is determined as the absence; and if the data is greater than the threshold, it is determined as the presence. For example, if the data acquired by the second node through sensing is (0.5, 20, 100), and the threshold is determined as 10, the data for the sensing feedback by the second node is converted to (0, 1, 1), i.e., (absence, presence, presence).

In some embodiments, the configuration information is related to at least one of: the sensing service requirement or the resource overhead required for the sensing feedback. For example, in case that the sensing application is in the outdoor scenario, 5 may be used as the feedback quantity precision of the data; and in case that the sensing application is in the indoor scenario, 0.01 may be used as the feedback quantity precision of the data. For another example, in order to reduce the resource overhead required for the sensing feedback, the feedback quantity precision may be reduced.

In some embodiments, the configuration information for the sensing feedback is further used for configuring at least one of a feedback quantity or a feedback threshold for transmitting the sensing feedback by the second node. The feedback quantity indicates a quantity of feedback information carried in the sensing feedback, and the feedback threshold indicates a threshold that the feedback information carried in the sensing feedback should meet.

In some embodiments, N represents a quantity indicated by the feedback quantity, and N is a positive integer. N pieces of feedback information include at least one of: N pieces of feedback information arranged in an ascending order of delay values, N pieces of feedback information arranged in a descending order of received energy values, or N pieces of feedback information arranged in a descending order of Doppler frequency shift values.

In some embodiments, the feedback information that meets the feedback threshold includes at least one of: a feedback information with a received energy value greater than or equal to the feedback threshold, a feedback information with a Doppler frequency shift value greater than or equal to the feedback threshold, or a feedback information with a moving speed value greater than or equal to the feedback threshold.

It should be noted that the configuration information for the sensing feedback may be used for separately configuring at least one of the feedback region or the feedback quantity precision for transmitting the sensing feedback by the second node, or may be used for separately configuring at least one of the feedback quantity or the feedback threshold for transmitting the sensing feedback by the second node, or may be used for configuring both the two types of configuration information mentioned above simultaneously. For example, when the sensing feedback is in the form of the point cloud, these two types of configuration information may be configured either separately or in combination. In addition, the type of configuration information for configuring the feedback quantity and the feedback threshold may also be used for the sensing scenario in which the sensing feedback is in the form of multiple variables feedback.

At operation 342, feedback information corresponding to the feedback region is parsed from the sensing feedback.

This operation is performed when the configuration information for the sensing feedback carries the feedback region.

In some embodiments, the first node receives the sensing feedback from the second node and reads data from the sensing feedback. The sensing feedback is transmitted by the second node after processing the sensing result based on the configuration information for the sensing feedback transmitted by the first node in the operation 320. That is, the first node and the second node have the same understanding of the sensing feedback region, so the first node may parse the feedback information corresponding to the feedback region from the sensing feedback.

For example, the configuration information for the sensing feedback carries the feedback region, the configured region is 5 meters to 25 meters, and the data partitioning granularity is 5 meters. The first node receives five pieces of energy information, which are (110, 105, -200, 90, -200) dBm, respectively. The first node parses the feedback information corresponding to the feedback region from the sensing feedback as follows: the energy information of 110 dBm corresponds to a sensing distance R = 5 meters, 105dBm corresponds to a sensing distance R = 10 meters, -200 dBm corresponds to a sensing distance R = 15 meters, 90 dBm corresponds to a sensing distance R = 20 meters, and -200 dBm corresponds to a sensing distance R = 25 meters.

At operation 344, feedback information that meets the feedback quantity precision is parsed from the sensing feedback.

This operation is performed when the configuration information for the sensing feedback carries the feedback quantity precision.

In some embodiments, the first node receives the sensing feedback from the second node and reads the data from the sensing feedback. The sensing feedback is transmitted by the second node after processing the sensing result based on the configuration information for the sensing feedback transmitted by the first node in the operation 320. That is, the first node and the second node have the same understanding of the feedback quantity precision of the sensing, so the first node may parse the feedback information that meets the feedback quantity precision from the sensing feedback.

For example, the configuration information for the sensing feedback carries the feedback quantity precision, and the configured feedback quantity precision is 5 dBm. The first node receives five pieces of energy information, which are (110, 105, -200, 90, -200) dBm, respectively. The feedback information parsed by the first node from the sensing feedback includes data of 110 dBm, 105 dBm, -200 dBm, 90 dBm, and -200 dBm, which meet the feedback quantity precision.

It should be noted that the operation 342 is executed when the configuration information for the sensing feedback carries the feedback region, and the operation 344 is executed when the configuration information for the sensing feedback carries the feedback quantity precision. When the configuration information for the sensing feedback carries both the feedback region and the feedback quantity precision, the operation 342 and the operation 344 are executed and the execution order is not specified. That is, the operation 342 and the operation 344 may be executed selectively, or both may be executed without the specified order.

In some embodiments, the configuration information for the sensing feedback further includes the feedback quantity. The first node reads the data from the sensing feedback, and parses N pieces of feedback information from the sensing feedback, N being the quantity indicated by the feedback quantity, and N being the positive integer. In some embodiments, the configuration information for the sensing feedback further includes the feedback threshold. The first node reads the data from the sensing feedback, and parses the feedback information that meets the feedback threshold from the sensing feedback. In some embodiments, the configuration information for the sensing feedback further includes the feedback quantity and the feedback threshold, the first node reads the data from the sensing feedback, and parses N pieces of feedback information that meet the feedback threshold from the sensing feedback, N being the quantity indicated by the feedback quantity, and N being the positive integer.

In summary, in the technical solutions provided by the embodiments of the disclosure, the configuration information for the sensing feedback is transmitted to the second node that performs the sensing, and the sensing feedback transmitted by the second node is parsed based on the configuration information for the sensing feedback, so that the data format of the sensing feedback between the first node and the second node is unified, and the first node can obtain the correct sensing feedback result.

In addition, the solutions may further configure different parameters for different sensing tasks, and the sensing feedback is configured flexibly based on the sensing application scenario and the overhead for the sensing feedback, so that the sensing feedback is more adaptable to the service requirement and a sensing efficiency is improved. The configuration information for the sensing feedback configured in the solutions may be in an arbitrary combination of various basic forms and representations, which has a great flexibility in the sensing feedback.

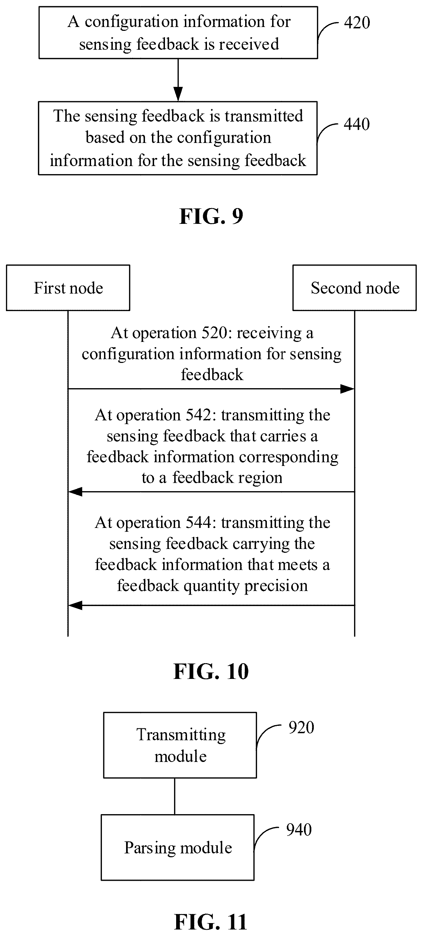

Please refer to FIG. 9, which is a flowchart illustrating a configuration method based on a sensing scenario according to an embodiment of the disclosure. The method is performed by a second node, and the second node may be the sensing node 20 in the sensing system illustrated in FIG. 2. The method includes the following operations.

At operation 420, a configuration information for sensing feedback is received.

The second node receives the configuration information for the sensing feedback from the first node. That is, the first node informs the second node of a data type and format to be used when transmitting the sensing feedback. The sensing feedback is used for feeding back a sensing result, or feeding back a measurement result for the sensing signal. The sensing feedback includes one or more feedback information related to the sensing result.

The first node is the sensing control node (i.e., the sensing trigger node) in the sensing scenario, and the second node is the sensing node in the sensing scenario. The second node performs sensing based on a sensing task configured by the first node (e.g., an indoor intrusion detection, a target location, etc.) and transmits the sensing feedback. The second node may be a base station or a terminal.

In some embodiments, the configuration information for the sensing feedback is used for configuring at least one of a feedback region or a feedback quantity precision for transmitting the sensing feedback by a second node.

In some embodiments, the feedback region is in at least one of the following forms:
a spherical region with the first node as a center and a radius of R;
a spatial region in a coordinate system with the first node as an origin, herein the spatial region refers to a region formed by multiple sensing coordinates in a same coordinate system, and the spatial region may be a cube or any irregular spatial geometry;
a fan-shaped open region with the first node as a vertex;
a fan-shaped closed region with the first node as a vertex;
a spherical region with the second node as a center and a radius of R;
a spatial region in a coordinate system with the second node as an origin;
a fan-shaped open region with the second node as a vertex;
a fan-shaped closed region with the second node as a vertex;
a spherical region with a sensing target as a center and a radius of R;
a spatial region in a coordinate system with the sensing target as an origin;
a fan-shaped open region with the sensing target as a vertex;
a fan-shaped closed region with the sensing target as a vertex; or
a spatial region determined based on a time difference between transmitting and receiving of a sensing signal. Herein the spatial region is a region corresponding to the time difference T between the transmitting and receiving of the sensing signal (i.e., a time difference T between a transmitting time T1 and a receiving time T2), or a region corresponding to a channel delay t (i.e., the delay t between time t1 and time t2).

In some embodiments, the feedback region may also be in a form of any combination of the above basic forms. For example, the feedback region is a spatial region with the first node as the center and a radius greater than or equal to R1 and less than R2 (both R1 and R2 are positive numbers and R1 is less than R2). For another example, the feedback region is an intersection region between a fan-shaped open region and another fan-shaped closed region both with the second node as the vertex, and so on. The disclosure does not limit the form of the feedback region.

In some embodiments, the feedback region is represented by at least one of:
coordinates in a coordinate system with the first node as an origin;
coordinates in a coordinate system with the second node as an origin;
coordinates in a reference coordinate system with a reference node as an origin, the reference node being different from the first node and the second node; herein the reference node is an origin of the reference system that is different from the first node and the second node and is selected based on a different sensing scenario, for example, a geodetic coordinate system is selected as the reference coordinate system;
an angle of incidence (or an angle of arrival) with the first node as a vertex;
an angle of departure with the first node as a vertex;
an angle of incidence (or an angle of arrival) with the second node as a vertex;
an angle of departure with the second node as a vertex;
a line between the first node and the second node;
a length value related to a sensing distance;
an angle value related to a sensing angle; or
a transmission delay related to a sensing signal. Herein the transmission delay refers to the time difference T between the transmitting and receiving of the sensing signal (i.e., the time difference T between the transmitting time T1 and the receiving time T2), or the channel delay t (i.e., the delay t between the time t1 and the time t2).

The following examples show several possible representations of the feedback region.
(a) The feedback region is represented by the length value related to the sensing distance, for example, the sensing distance R. The feedback region may be in the form of: the spherical region with the first node as the center and the radius of R, the spherical region with the second node as the center and the radius of R, or the spherical region with the sensing target as the center and the radius of R, and the like.

It should be noted that the feedback region represented by the sensing distance R may be a two-dimensional planar region (i.e., a circle) or a three-dimensional spatial region (i.e., a sphere). For example, as illustrated in FIG. 4, the feedback region is a planar circular region with the first node as the center and the radius of R.

(b) The feedback region is represented by coordinates, for example, the coordinates in the coordinate system with the first node as the origin, the coordinates in the coordinate system with the second node as the origin, the coordinates in the reference coordinate system, and the like. The feedback region may be in the form of: the spatial region in the coordinate system with the first node as the origin, the spatial region in the coordinate system with the second node as the origin, or the spatial region in the coordinate system with the sensing target as the origin.

The reference coordinate system is a coordinate system with the reference node as the origin, and the reference node is different from the first node and the second node. For example, the reference coordinate system is the geodetic coordinate system. The disclosure does not limit the selection of the reference coordinate system.

It should be noted that the feedback region represented by the coordinates may be the two-dimensional planar region or the three-dimensional spatial region. For example, the feedback region is a planar region formed by coordinates (X1, Y1), (X2, Y2), (X3, Y3) and (X4, Y4) in the coordinate system with the first node as the origin. For another example, the feedback region is a spatial region formed by coordinates (X1, Y1, Z1), (X2, Y2, Z1), (X3, Y3, Z1), (X4, Y4, Z1), (X1, Y1, Z2), (X2, Y2, Z2), (X3, Y3, Z2), and (X4, Y4, Z2) in the coordinate system with the first node as the origin. For another example, as illustrated in FIG. 5, the feedback region is a spatial region formed by coordinates (X1, Y1, Z1), (X2, Y2, Z2), (X3, Y3, Z3), (X4, Y4, Z4), (X5, Y5, Z5), (X6, Y6, Z6), (X7, Y7, Z7), and (X8, Y8, Z8) in the reference coordinate system.

In some embodiments, in case that absolute values of the X-axis coordinates (e.g., X1, X2, X3, X4) are the same, only an absolute value of X needs to be configured. In case that absolute values of the Y-axis coordinates (e.g. Y1, Y2, Y3, Y4) are the same, only an absolute value of Y needs to be configured. In case that absolute values of the Z-axis coordinates (e.g. Z1, Z2) are the same, only an absolute value of Z needs to be configured.

(c) The feedback region is represented by an angle value related to the sensing angle, for example, the angle of incidence, the angle of arrival, the angle of departure, etc. For example, the information for representing the feedback region may be the angle of incidence (or the angle of arrival) with the first node as the vertex, the angle of departure with the first node as the vertex, the angle of incidence (or the angle of arrival) with the second node as the vertex, or the angle of departure with the second node as the vertex. The feedback region may be in the form of: the fan-shaped open region with the first node as the vertex, the fan-shaped open region with the second node as the vertex, the fan-shaped open region with the sensing target as the vertex, or the like.

It should be noted that the feedback region represented by the angle value may be the two-dimensional planar region or the three-dimensional spatial region. For example, the feedback region is a planar or spatial region with an angle of incidence ranging from θ1 to 02. For another example, as illustrated in FIG. 6, the feedback region is a planar fan-shaped open region with the first node as the vertex and the angle of incidence ranging from θ1 to θ2 with reference to the line between the first node and the second node.

(d) The feedback region is represented by the angle value related to the sensing angle and the length value related to the sensing distance jointly. The feedback region may be in the form of: the fan-shaped closed region with the first node as the vertex, the fan-shaped closed region with the second node as the vertex, or the fan-shaped closed region with the sensing target as the vertex, and the like.

For example, as illustrated in FIG. 7, the feedback region is a planar fan-shaped closed region with the first node as the vertex, the sensing distance R as the radius, and the angle of incidence ranging from θ1 to θ2 with reference to the line between the first node and the second node.

(e) The feedback region is represented by a transmission delay related to the sensing signal. The transmission delay may be the delay t or the time difference T between the transmitting and receiving of the sensing signal. The feedback region may be in the form of: a spatial region determined based on the delay t or a spatial region determined based on the time difference between transmitting and receiving of the sensing signal.

For example, the feedback region is a region corresponding to the delay t read from an estimated channel. For another example, the feedback region is a region corresponding to the time difference T between the transmitting and receiving of the sensing signal.

It should be noted that the feedback region represented by the transmission delay related to the sensing signal may be the three-dimensional spatial region or the two-dimensional planar region, which is not limited in the disclosure.

It should be noted that the examples listed above are only partial examples of the feedback region. The feedback region may be configured using any free combination of the above representations and basic forms, which is not limited in the disclosure.

In some embodiments, the configuration information further carries a unit associated with the feedback region. The unit may be an international standard unit or a user-defined unit. For example, the unit of the length (e.g., the sensing distance) may be a meter, a decimeter, a centimeter, etc.; the unit of the time (e.g., the transmission delay) may be a millisecond, a microsecond, a nanosecond, or a symbol, a subframe, or a sampling interval (i.e., a time between points corresponding to two consecutive sampling pulses), or a user-defined time unit Tc, etc., herein Tc is typically determined by a subcarrier spacing, the number of subcarriers, or a signal bandwidth; the unit of the angle (e.g., the angle of incidence, the angle of departure, etc.) may be a degree (°), π, etc.

In some embodiments, the configuration information further carries a data partitioning granularity in the feedback region. The data partitioning granularity indicates a partitioning granularity of sensing signals or echo signals (i.e., the signals received by the sensing node after reflection) in the feedback region that are combined into a same feedback information for feedback. That is, the data partitioning granularity indicates that one or more data in one partitioning granularity region are combined into the same feedback information for feedback. That is, the feedback region is partitioned into at least one partitioning granularity region based on the data partitioning granularity, and the data in each partitioning granularity region are combined for feedback. For example, if the data partitioning granularity is defined as 10 Tc, the sensing signals or echo signals in an interval of [n, n+10) Tc are combined into a same sensing feedback information for feedback, n being a natural number. For another example, if the data partitioning granularity is defined as 5 cm, the sensing signals or echo signals in an interval of [n, n+5) cm are combined into one sensing feedback information for feedback.

In some embodiments, the method for combining the sensing signals or the echo signals into the same feedback information may include: taking a maximum value of sensing signal values or echo signal values in the interval, or taking a minimum value of the sensing signal values or the echo signal values in the interval, or taking an average value of the sensing signal values or the echo signal values in the interval, or taking a sum of the sensing signal values or the echo signal values in the interval (i.e., a result obtained by adding the sensing signal values or adding the echo signal values in the interval), and so on. The method for combining the sensing signals or the echo signals is not limited in the disclosure.

The feedback quantity precision indicates a precision corresponding to a feedback information carried in the sensing feedback.

The configuration information is related to at least one of: a sensing service requirement or a resource overhead required for the sensing feedback. For example, in case that the sensing application is in an outdoor scenario, the unit of meter or ten of meters may be used, and the feedback region may be 0-2000 meters, that is, the sensing distance is 2000 meters. In case that the sensing application is in an indoor scenario, the unit of decimeter may be used, and the feedback region may be 0-5 meters, that is, the sensing distance is 5 meters. For another example, in order to reduce the resource overhead required for the sensing feedback, the information in the sensing feedback may be represented by index numbers. For example, if energy values {0, 5, 10, 15, 20} correspond to the indices {0, 1, 2, 3, 4} respectively, the feedback information {0, 0, 15, 0, 0, 10, 10, 0, 0, 0} is correspondingly denoted as {0, 0, 3, 0, 0, 2, 2, 0, 0, 0} based on the index numbers.

At operation 440, the sensing feedback is transmitted based on the configuration information for the sensing feedback.

After performing the sensing, the second node transmits the sensing feedback to the first node based on the configuration information for the sensing feedback.

In some embodiments, the configuration information for the sensing feedback includes the feedback region. The second node sends the sensing feedback that carries a feedback information corresponding to the feedback region.

In some embodiments, the configuration information for the sensing feedback includes the feedback quantity precision. The second node sends the sensing feedback carrying a feedback information that meets the feedback quantity precision.

In some embodiments, the configuration information for the sensing feedback includes the feedback region and the feedback quantity precision. The second node sends, based on the feedback region and the feedback quantity precision, the sensing feedback carrying a feedback information that corresponds to the feedback region and meets the feedback quantity precision.

In summary, in the technical solutions provided by the embodiments of the disclosure, the configuration information for the sensing feedback is received, and then the sensing feedback is sent to the first node based on the configuration information for the sensing feedback, so that the data format of the sensing feedback between the first node and the second node is unified, and the sensing feedback can correctly reach the first node. In the solutions, different parameters may be configured for different sensing tasks. On the basis of the consistent understanding of the information between the first node and second node, the sensing feedback may also be flexibly configured based on a sensing application scenario and an overhead for the sensing feedback, so that the sensing feedback is more adaptable to the service requirement.

In an alternative embodiment based on FIG. 9, the configuration information for the sensing feedback may be the feedback region or the feedback quantity precision. These two types of information that may be carried in the configuration information for the sensing feedback will be described exemplarily below.

FIG. 10 is a flowchart illustrating a configuration method based on a sensing scenario according to an embodiment of the disclosure. The method may be applied to the sensing system illustrated in FIG. 2 and is performed by the second node, and the first terminal may be the sensing node 20 in the sensing system illustrated in FIG. 2. The method may include the following operations.

At operation 520, a configuration information for sensing feedback is received.

The second node receives the configuration information for the sensing feedback transmitted by the first node. That is, the first node informs the second node of a data type and format to be used when transmitting the sensing feedback. The first node is the sensing control node (i.e., the sensing trigger node) in the sensing scenario, and the second node is the sensing node in the sensing scenario. The second node performs sensing based on a sensing task configured by the first node, and transmits the sensing feedback. The second node may be a base station or a terminal.

In some embodiments, the configuration information for the sensing feedback is used for configuring at least one of a feedback region or a feedback quantity precision for transmitting the sensing feedback by the second node. That is, the configuration information for the sensing feedback includes the feedback region. Alternatively, the configuration information for the sensing feedback includes the feedback quantity precision. Alternatively, the configuration information for the sensing feedback includes the feedback region and the feedback quantity precision.

The feedback region and the feedback quantity precision will be described below respectively.
1) The configuration information for the sensing feedback carries the feedback region.

For the description of the feedback region, reference is made to the related description at the operation 420 and will not be repeated here.

In some embodiments, no sensing feedback is provided for a sensing information outside the feedback region, or the sensing information outside the feedback region is mapped to a boundary of the feedback region for the sensing feedback. For example, the feedback region is configured as a region where the sensing distance is from R1 to R2, and the second node detects an echo energy at the position R3, with R3 > R2. In a possible implementation, the second node does not feed back the echo information formed at R3, for example, the energy P. In another possible implementation, the second node maps the information of the energy P to the position R2 for feedback, and in this case, R1/R2 is no longer a definite value, but refers to a region less than or equal to R1/a region greater than or equal to R2.

In some embodiments, the configuration information is related to at least one of: the sensing service requirement or the resource overhead required for the sensing feedback. Different data sensing regions or sensing units or sensing granularities may be configured for different sensing tasks. For example, when the sensing task is to monitor an intruder on a highway or a high-speed train, the unit of the meter or ten of meters may be used, and a measurement region may be 0-2000 meters. For another example, when the sensing task is to monitor an indoor intruder, the unit of the meter or decimeter may be used, and the measurement region may be 0-5 meters.

2) The configuration information for the sensing feedback carries the feedback quantity precision.

The feedback quantity precision indicates the precision corresponding to the feedback information carried in the sensing feedback. That is, the feedback quantity precision indicates a smallest unit of the feedback information.

For example, if the feedback quantity precision of the energy in the feedback information is 5 dBm, selectable values of the energy in the feedback information are arranged in an ascending order as: 0 dBm, 5 dBm, 10 dBm, 15 dBm ... 100 dBm. For another example, if the feedback quantity precision of data in the feedback information is 0.01, selectable values of the feedback quantity are arranged in an ascending order as: 0, 0.01, 0.02 ... 1.

In some embodiments, the data in the feedback information may be normalized before the sensing feedback is provided. For example, the second node receives and detects the echo signals, and obtains three values of (2, 3, 5). These values are first converted into (0.2, 0.3, 0.5) through normalization, and then are used for the sensing feedback. Normalization process makes the data comparable among different devices.

In some embodiments, the feedback quantity precision of the data or energy in the feedback information is 0 or 1, i.e. absence or presence. The presence or absence is determined based on the feedback quantity precision using a threshold. If the data is less than the threshold, it is determined as the absence; and if the data is greater than the threshold, it is determined as the presence. For example, if the data acquired by the second node through sensing is (0.5, 20, 100), and the threshold is determined as 10, the data for the sensing feedback by the second node is converted to (0, 1, 1), i.e., (absence, presence, presence).

In some embodiments, the configuration information is related to at least one of: the sensing service requirement or the resource overhead required for the sensing feedback. For example, in case that the sensing application is in the outdoor scenario, 5 may be used as the feedback quantity precision of the data; and in case that the sensing application is in the indoor scenario, 0.01 may be used as the feedback quantity precision of the data. For another example, in order to reduce the resource overhead required for the sensing feedback, the feedback quantity precision may be reduced.

In some embodiments, the configuration information for the sensing feedback is further used for configuring at least one of a feedback quantity or a feedback threshold for transmitting the sensing feedback by the second node. The feedback quantity indicates a quantity of feedback information carried in the sensing feedback, and the feedback threshold indicates a threshold that the feedback information carried in the sensing feedback should meet.

In some embodiments, N represents a quantity indicated by the feedback quantity, and N is a positive integer. N pieces of feedback information include at least one of: N pieces of feedback information arranged in an ascending order of delay values, N pieces of feedback information arranged in a descending order of received energy values, or N pieces of feedback information arranged in a descending order of Doppler frequency shift values.

In some embodiments, the feedback information that meets the feedback threshold includes at least one of: a feedback information with a received energy value greater than or equal to the feedback threshold, a feedback information with a Doppler frequency shift value greater than or equal to the feedback threshold, or a feedback information with a moving speed value greater than or equal to the feedback threshold.

It should be noted that the configuration information for the sensing feedback may be used for separately configuring at least one of the feedback region or the feedback quantity precision for transmitting the sensing feedback by the second node, or may be used for separately configuring at least one of the feedback quantity or the feedback threshold for transmitting the sensing feedback by the second node, or may be used for configuring both the two types of configuration information mentioned above simultaneously. For example, when the sensing feedback is in the form of the point cloud, these two types of configuration information may be configured either separately or in combination. In addition, the type of configuration information for configuring the feedback quantity and the feedback threshold may also be used for the sensing scenario in which the sensing feedback is in the form of multiple variables feedback.

At operation 542, the sensing feedback that carries the feedback information corresponding to the feedback region is transmitted.

This operation is performed when the configuration information for the sensing feedback carries the feedback region.

In some embodiments, after receiving the configuration information for the sensing feedback from the first node, the second node processes a sensing feedback information based on the configuration information for the sensing feedback, and transmits the sensing feedback carrying the processed feedback information to the first node. Since the first node and the second node use the same configuration information for the sensing feedback, that is, the first node and the second node have the same understanding of the sensing feedback region, the first node may parse the feedback information corresponding to the feedback region from the sensing feedback.

For example, the configuration information for sensing feedback carries the feedback region, the configured region is 5 meters to 25 meters, and the data partitioning granularity is 5 meters. The second node senses three pieces of energy information, which are (110, 105, 90) dBm, respectively, and the positions corresponding to the energy information are (5.5 m, 11.5 m, 20 m), respectively. The second node processes the sensing result into the feedback information (110, 105, -200, 90, -200) dBm corresponding to the feedback region, carries the feedback information in the sensing feedback and transmits to the first node. Herein, -200 dBm indicates no received energy. That is, 110 dBm of energy is sensed in the feedback region of [5, 10), 105 dBm of energy is sensed in the feedback region of [10, 15), no energy is sensed in the feedback region of [15, 20), 90 dBm of energy is sensed in the feedback region of [20, 25), and no energy is sensed in the feedback region of [25, 30).

At operation 544, the feedback information that meets the feedback quantity precision is carried in the sensing feedback and transmitted.

This operation is performed when the configuration information for the sensing feedback carries the feedback quantity precision.

In some embodiments, after receiving the configuration information for the sensing feedback from the first node, the second node processes the sensing feedback information based on the configuration information for the sensing feedback, and transmits the sensing feedback carrying the processed feedback information to the first node. Since the first node and the second node use the same configuration information for the sensing feedback, that is, the first node and the second node have the same understanding of the feedback quantity precision of sensing, the first node may parse the feedback information that meets the feedback quantity precision from the sensing feedback.

For example, the configuration information for the sensing feedback carries the feedback quantity precision, and the configured feedback quantity precision is 5 dBm. The second node senses three pieces of energy information, which are (114, 105, 92) dBm, respectively. The second node processes the sensing result into the feedback information (110, 105, 90) dBm corresponding to the feedback quantity precision. That is, 114 dBm is in the interval of [110, 115) and denoted as 110 based on the feedback quantity precision, 105 dBm is in the interval of [105, 110) and denoted as 105 based on the feedback quantity precision, and 92 dBm is in the interval of [90, 95) and denoted as 90 based on the feedback quantity precision.

In some embodiments, since the energy values quantized based on the feedback quantity precision are non-continuous natural numbers, which may be represented by the index numbers, to reduce the feedback overhead. For example, if the energy values {0, 5, 10, 15, 20} correspond to the indices {0, 1, 2, 3, 4} respectively, the feedback information {0, 0, 15, 0, 0, 10, 10, 0, 0, 0} is correspondingly denoted as {0, 0, 3, 0, 0, 2, 2, 0, 0, 0} based on the index numbers.

It should be noted that the operation 542 is executed when the configuration information for the sensing feedback carries the feedback region, and the operation 544 is executed when the configuration information for the sensing feedback carries the feedback quantity precision. When the configuration information for the sensing feedback carries both the feedback region and the feedback quantity precision, the operation 542 and the operation 544 are executed and the execution order is not specified. That is, the operation 542 and the operation 544 may be executed selectively, or both may be executed without the specified order.

In some embodiments, the configuration information for the sensing feedback includes the feedback quantity. The second node transmits the sensing feedback carrying the feedback information corresponding to the feedback quantity. That is, the second node transmits the sensing feedback, which carries N pieces of feedback information, N being the quantity indicated by the feedback quantity, and N being the positive integer.

In some embodiments, the configuration information for the sensing feedback includes the feedback threshold. The second node transmits the sensing feedback carrying the feedback information that meets the feedback threshold. That is, the second node transmits the sensing feedback, and the sensing feedback carries the feedback information that meets the feedback threshold.

In some embodiments, the configuration information for the sensing feedback includes the feedback quantity and the feedback threshold. The second node transmits, based on the feedback quantity and the feedback threshold, the sensing feedback carrying the feedback information that corresponds to the feedback quantity and meets the feedback threshold.

In summary, in the technical solutions provided by the embodiments of the disclosure, the configuration information for the sensing feedback is received, and then the sensing feedback is transmitted to the first node based on the configuration information for the sensing feedback, so that the data format of the sensing feedback between the first node and the second node is unified, and the sensing feedback may correctly reach the first node.

In addition, the solutions may further configure different parameters for different sensing tasks, and the sensing feedback is configured flexibly based on the sensing application scenario and the overhead for the sensing feedback, so that the sensing feedback is more adaptable to the service requirement and a sensing efficiency is improved. The configuration information for the sensing feedback configured in the solutions may be in an arbitrary combination of various basic forms and representations, which has a great flexibility in the sensing feedback.

The configuration method based on the sensing scenario in the disclosure is described below by taking the sensing task for monitoring the indoor intrusion as an example.

The first node triggers the sensing task for monitoring the indoor intrusion and transmits the configuration information for the sensing feedback to the second node. The configuration information for the sensing feedback indicates that the feedback region is a closed semicircle with a sensing distance R of 0 to 5 meters and a sensing angle of 0 to 180 degrees. The data partitioning granularity in the feedback region is 0.5 meters, the feedback quantity is the echo energy, the range of the feedback quantity is 0 to 20 dBm, and the feedback quantity precision is 5 dBm.

The second node receives the sensing task and performs sensing. That is, the second node transmits the sensing signal and receives the sensing signal. The second node receives signal energies of (18 dBm, 15 dBm, 13 dBm) at 3.3 ns, 9.5 ns, and 11.2 ns (corresponding distances are 1 meter, 2.8 meters, and 3.4 meters) respectively after analyzing the received sensing signal. The second node feeds back a result of the received sensing signal in the predefined format, that is, {0, 0, 15, 0, 0, 15, 10, 0, 0, 0} based on the configuration information for the sensing feedback.

1 meter corresponds to the interval of [1, 1.5), which is the third position in the array, 2.8 meters corresponds to the interval of [2.5, 3), which is the sixth position in the array, and 3.4 meters corresponds to the interval of [3, 3.5), which is the seventh position in the array. 18 dBm corresponds to the interval of [15, 20) and is denoted as 15, 15 dBm corresponds to the interval of [15, 20) and is denoted as 15, and 13 dBm corresponds to the interval of [10, 15) and is denoted as 10.

In another implementation, the energy values that meet the feedback quantity precision are represented by index numbers to reduce the feedback overhead. Specifically, the energy values {0, 5, 10, 15, 20} correspond to the indices {0, 1, 2, 3, 4} respectively, and the feedback information for sensing is correspondingly denoted as {0, 0, 3, 0, 0, 3, 2, 0, 0, 0}.

The sensing task for monitoring the indoor intrusion is used as an example below to describe another indexing approach (i.e., configuring a sensing feedback mapping table) in the configuration method based on the sensing scenario in the disclosure.

The first node triggers the sensing task for monitoring the indoor intrusion, and configures the sensing feedback mapping table for indexing. Herein the sensing feedback mapping table may be predefined. For example, the system contains two feedback mapping tables, such as Table 1 and Table 2. Table 1 is used for feedback of a sensing information in a small range, and Table 2 is used for feedback of a sensing information in a large range. In the present sensing task, the range for monitoring the indoor intrusion is smaller, so Table 1 is selected.

**Table 1**

| interval index | delay interval (Tc, Tc = 5.0*10^-10s) |
|---|---|
| 0 | 0-5 |
| 1 | 5-10 |
| 2 | 10-15 |
| 3 | 15-20 |
| 4 | 20-25 |

**Table 2**

| interval index | delay interval (Tc, Tc = 5.0*10^-10s) |
|---|---|
| 0 | 0-20 |
| 1 | 20-40 |
| 2 | 40-60 |
| 3 | 60-80 |
| 4 | 80-100 |

The second node receives the sensing task and performs sensing. That is, the second node transmits the sensing signal and receives the sensing signal. The second node receives signal energies of (18 dBm, 15 dBm, 13 dBm) at 3.3 ns, 9.5 ns, and 11.2 ns (corresponding distances are 7 Tc, 19 Tc, and 22 Tc) respectively after analyzing the received sensing signal. 7 Tc corresponds to the interval index 1, 19 Tc corresponds to the interval index 3, and 22 Tc corresponds to the interval index 4.

In a possible implementation, the result of the received sensing signal is mapped in a bitmap. That is, the delay position corresponding to the energy greater than 0 dBm is set to 1, otherwise it is set to 0. In this way, the feedback information corresponding to the sensing feedback is {0, 1, 0, 1, 1}.

The following are apparatus embodiments of the disclosure, which may be used to implement the method embodiments of the disclosure. For details not disclosed in the apparatus embodiments of the disclosure, reference is made to the method embodiments of the disclosure.

FIG. 11 is a structural block diagram of a configuration apparatus based on a sensing scenario according to an embodiment of the disclosure. The apparatus has a functionality to implement the above exemplary method of the first node, and the functionality may be implemented through hardware or through executing corresponding software by the hardware. The apparatus may be the first node described above or may be arranged in the first node. As illustrated in FIG. 11, the apparatus includes a transmitting module 920 and a parsing module 940.

The transmitting module 920 is configured to transmit a configuration information for sensing feedback. The configuration information for the sensing feedback is used for configuring at least one of a feedback region or a feedback quantity precision for transmitting the sensing feedback by a second node.

The parsing module 940 is configured to parse the sensing feedback based on the configuration information for the sensing feedback.

The transmitting module 920 may be implemented by a transmitter or a transceiver in a sensing device, and the parsing module 940 may be implemented by a processor in the sensing device.

In a possible implementation, the feedback region indicates a region corresponding to a feedback information carried in the sensing feedback. The parsing module 940 is further configured to parse the feedback information corresponding to the feedback region from the sensing feedback.

In a possible implementation, the feedback region includes at least one of: a spherical region with the first node as a center and a radius of R; a spatial region in a coordinate system with the first node as an origin; a fan-shaped open region with the first node as a vertex; a fan-shaped closed region with the first node as a vertex; a spherical region with the second node as a center and a radius of R; a spatial region in a coordinate system with the second node as an origin; a fan-shaped open region with the second node as a vertex; a fan-shaped closed region with the second node as a vertex; a spherical region with a sensing target as a center and a radius of R; a spatial region in a coordinate system with the sensing target as an origin; a fan-shaped open region with the sensing target as a vertex; a fan-shaped closed region with the sensing target as a vertex; or a spatial region determined based on a time difference between transmitting and receiving of a sensing signal.

In a possible implementation, the feedback region is represented by at least one of: coordinates in a coordinate system with the first node as an origin; coordinates in a coordinate system with the second node as an origin; coordinates in a reference coordinate system with a reference node as an origin, the reference node being different from the first node and the second node; an angle of incidence with the first node as a vertex; an angle of departure with the first node as a vertex; an angle of incidence with the second node as a vertex; an angle of departure with the second node as a vertex; a line between the first node and the second node; a length value related to a sensing distance; an angle value related to a sensing angle; or a transmission delay related to a sensing signal.

In a possible implementation, the configuration information further carries a unit associated with the feedback region.

In a possible implementation, the configuration information further carries a data partitioning granularity in the feedback region, and the data partitioning granularity indicates a partitioning granularity of sensing signals or echo signals in the feedback region that are combined into a same feedback information for feedback.

In a possible implementation, the feedback quantity precision indicates a precision corresponding to a feedback information carried in the sensing feedback. The parsing module 940 is further configured to parse the feedback information that meets the feedback quantity precision from the sensing feedback.

In a possible implementation, the configuration information is related to at least one of: a sensing service requirement or a resource overhead required for the sensing feedback.

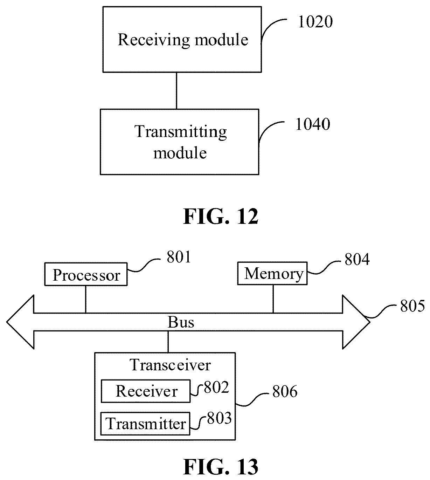

FIG. 12 is a structural block diagram of a configuration apparatus based on a sensing scenario according to an embodiment of the disclosure. The apparatus has a functionality to implement the above exemplary method of the second node, and the functionality may be implemented through hardware or through executing corresponding software by the hardware. The apparatus may be the second node described above or may be arranged in the second node. As illustrated in FIG. 12, the apparatus includes a receiving module 1020 and a transmitting module 1040.

The receiving module 1020 is configured to receive a configuration information for sensing feedback. The configuration information for the sensing feedback is used for configuring at least one of a feedback region or a feedback quantity precision for transmitting the sensing feedback by the second node.

The transmitting module 1040 is configured to transmit the sensing feedback based on the configuration information for the sensing feedback.

The receiving module 1020 may be implemented by a receiver or a transceiver in a sensing device, and the transmitting module 1040 may be implemented by a transmitter or the transceiver in the sensing device.

In a possible implementation, the feedback region indicates a region corresponding to a feedback information carried in the sensing feedback. The transmitting module 1040 is further configured to transmit the sensing feedback that carries the feedback information corresponding to the feedback region.

In a possible implementation, the feedback region includes at least one of: a spherical region with the first node as a center and a radius of R; a spatial region in a coordinate system with the first node as an origin; a fan-shaped open region with the first node as a vertex; a fan-shaped closed region with the first node as a vertex; a spherical region with the second node as a center and a radius of R; a spatial region in a coordinate system with the second node as an origin; a fan-shaped open region with the second node as a vertex; a fan-shaped closed region with the second node as a vertex; a spherical region with a sensing target as a center and a radius of R; a spatial region in a coordinate system with the sensing target as an origin; a fan-shaped open region with the sensing target as a vertex; a fan-shaped closed region with the sensing target as a vertex; or a spatial region determined based on a time difference between transmitting and receiving of a sensing signal.

In a possible implementation, the feedback region is represented by at least one of: coordinates in a coordinate system with the first node as an origin; coordinates in a coordinate system with the second node as an origin; coordinates in a reference coordinate system with a reference node as an origin, the reference node being different from the first node and the second node; an angle of incidence with the first node as a vertex; an angle of departure with the first node as a vertex; an angle of incidence with the second node as a vertex; an angle of departure with the second node as a vertex; a line between the first node and the second node; a length value related to a sensing distance; an angle value related to a sensing angle; or a transmission delay related to a sensing signal.

In a possible implementation, the configuration information further carries a unit associated with the feedback region.

In a possible implementation, the configuration information further carries a data partitioning granularity in the feedback region, and the data partitioning granularity indicates a partitioning granularity of sensing signals or echo signals in the feedback region that are combined into a same feedback information for feedback.

In a possible implementation, the feedback quantity precision indicates a precision corresponding to a feedback information carried in the sensing feedback. The transmitting module 1040 is further configured to transmit the sensing feedback carrying the feedback information that meets the feedback quantity precision.

In a possible implementation, the configuration information is related to at least one of: a sensing service requirement or a resource overhead required for the sensing feedback.

It should be noted that when the apparatuses provided by the above embodiments implement their functions, the division of the above-mentioned functional modules is used as an example for illustration. In practical applications, the above-mentioned functions may be completed by different functional modules according to actual needs. That is, a content structure of the apparatus may be divided into different functional modules to complete all or part of the functions described above.

Regarding the apparatuses in the above embodiments, the specific manner in which each module executes the operation has been described in detail in the embodiments related to the methods, and will not be described in detail here.

Please refer to FIG. 13, which is a schematic structural diagram of a sensing device according to an embodiment of the disclosure. The sensing device may include a processor 801, a receiver 802, a transmitter 803, a memory 804, and a bus 805.

The processor 801 includes one or more processing cores, and the processor 801 executes various functional applications and information processing by running a software program and module. In some embodiments, the processor 801 may be configured to implement the functions and operations of the parsing module 940 described above.

The receiver 802 and the transmitter 803 may be implemented as a transceiver 806, which may be a communication chip. The receiver 802 may be configured to implement the functions and operations of the receiving module 1020 described above, and the transmitter 803 may be configured to implement the functions and operations of the transmitting module 920 and the receiving module 1040 described above.

The memory 804 is connected to the processor 801 through the bus 805. The memory 804 may be configured to store a computer program, and the processor 801 is configured to execute the computer program, to implement various operations performed by the nodes in the above method embodiments.

In addition, the memory 804 may be implemented by any type of volatile or non-volatile storage device or any combination thereof, the volatile or non-volatile storage device including, but not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or other solid state storage technology, a Compact Disc Read-Only Memory (CD-ROM), a Digital Video Disc (DVD) or other optical storages, a cassette, a magnetic tape, a magnetic disk storage or other magnetic storage devices.

When the sensing device is implemented as the first node, the processor and the transceiver involved in the embodiments of the disclosure may execute the operations executed by the first node in any one of the above methods shown in FIG. 3 to FIG. 4, and will not be repeated here.

In a possible implementation, when the sensing device is implemented as the first node, the transmitter 803 is configured to transmit a configuration information for sensing feedback. The configuration information for the sensing feedback is used for configuring at least one of a feedback region or a feedback quantity precision for transmitting the sensing feedback by a second node. The processor 801 is configured to parse the sensing feedback based on the configuration information for the sensing feedback.

When the sensing device is implemented as a second node, the processor and the transceiver involved in the embodiments of the disclosure may execute the operations executed by the second node in any one of the above methods shown in FIG. 9 to FIG. 10, and will not be repeated here.

In a possible implementation, when the sensing device is implemented as the second node, the receiver 802 is configured to receive a configuration information for sensing feedback. The configuration information for the sensing feedback is used for configuring at least one of a feedback region or a feedback quantity precision for transmitting the sensing feedback by the second node. The transmitter 803 is configured to transmit the sensing feedback based on the configuration information for the sensing feedback.

An embodiment of the disclosure further provides a computer-readable storage medium having stored thereon computer programs that, when executed by processors of a first node and a second node, cause the processors to implement the above configuration methods based on the sensing scenario.

Optionally, the computer-readable storage medium may include: a ROM, a RAM, a Solid State Drive (SSD), an optical disk, or the like. The RAM may include a Resistance Random Access Memory (ReRAM) and a Dynamic Random Access Memory (DRAM).

An embodiment of the disclosure further provides a chip. The chip includes a programmable logic circuit and/or program instructions. The chip is configured to, when being operated on a first node and a second node, perform the above configuration methods based on the sensing scenario.

An embodiment of the disclosure further provides a computer program product or a computer program. The computer program product or the computer program includes computer instructions stored in a computer-readable storage medium, and processors of the first node and the second node read the computer instructions from the computer-readable storage medium and execute the computer instructions to implement the above configuration methods based on the sensing scenario.

It should also be understood that "indication/indicate/indicating" mentioned in the embodiments of the disclosure may be a direct indication, an indirect indication, or a representation of an association relationship. For example, A indicates B, which may represent that A directly indicates B, e.g., B may be obtained from A; or may represent that A indirectly indicates B, e.g., A indicates C and B may be obtained from C; or may represent that there is an association relationship between A and B. The term "correspondence/correspond/corresponding" mentioned in the embodiments of the disclosure may represent that there is a direct correspondence or an indirect correspondence between two objects; or may represent an association relationship between the two objects, or a relationship between indication and being indicated, between configuration and being configured or the like. The term "multiple" mentioned herein refers to two or more than two. The term "and/or" describes an association relationship between associated objects, and represents that three relationships may exist. For example, A and/or B may represent three situations: independent existence of A, existence of both A and B, and independent existence of B. The character "/" used herein usually represents that the associated objects before and after the character "/" form an "or" relationship. In addition, the numbering of the operations described herein only exemplarily shows a possible sequence of execution among the operations. In some other embodiments, the above operations may also be executed in an order different from their numbering. For example, two differently numbered operations may be executed at the same time, or two differently numbered operations may be executed in an order opposite to that shown in the figure, which is not limited in the embodiments of the disclosure.

Those skilled in the art should be aware that, in the above one or more examples, the functions described in the embodiments of the disclosure may be implemented by hardware, software, firmware or any combination thereof. When implemented in software, the functions may be stored in a computer-readable medium or transmitted as one or more instructions or codes on the computer-readable medium. The computer-readable medium includes both a computer storage medium and a communication medium. The communication medium includes any medium that facilitates transfer of a computer program from one place to another place. The storage medium may be any available medium that may be accessed by a general purpose or special purpose computer. The foregoing descriptions are only exemplary embodiments of the disclosure, and are not intended to limit the disclosure. Any modifications, equivalent replacements, improvements, etc. made within the spirit and principles of the disclosure should fall within the scope of protection of the disclosure.

## Claims

1. A configuration method based on a sensing scenario, performed by a first node, and comprising:
transmitting a configuration information for sensing feedback, wherein the configuration information for the sensing feedback is used for configuring at least one of a feedback region or a feedback quantity precision for transmitting the sensing feedback by a second node; and
parsing the sensing feedback based on the configuration information for the sensing feedback.

2. The method of claim 1, wherein the feedback region indicates a region corresponding to a feedback information carried in the sensing feedback; and
parsing the sensing feedback based on the configuration information for the sensing feedback comprises:
parsing the feedback information corresponding to the feedback region from the sensing feedback.

3. The method of claim 2, wherein the feedback region comprises at least one of:
a spherical region with the first node as a center and a radius of R;
a spatial region in a coordinate system with the first node as an origin;
a fan-shaped open region with the first node as a vertex;
a fan-shaped closed region with the first node as a vertex;
a spherical region with the second node as a center and a radius of R;
a spatial region in a coordinate system with the second node as an origin;
a fan-shaped open region with the second node as a vertex;
a fan-shaped closed region with the second node as a vertex;
a spherical region with a sensing target as a center and a radius of R;
a spatial region in a coordinate system with the sensing target as an origin;
a fan-shaped open region with the sensing target as a vertex;
a fan-shaped closed region with the sensing target as a vertex; or
a spatial region determined based on a time difference between transmitting and receiving of a sensing signal.

4. The method of claim 2, wherein the feedback region is represented by at least one of:
coordinates in a coordinate system with the first node as an origin;
coordinates in a coordinate system with the second node as an origin;
coordinates in a reference coordinate system with a reference node as an origin, the reference node being different from the first node and the second node;
an angle of incidence with the first node as a vertex;
an angle of departure with the first node as a vertex;
an angle of incidence with the second node as a vertex;
an angle of departure with the second node as a vertex;
a line between the first node and the second node;
a length value related to a sensing distance;
an angle value related to a sensing angle; or
a transmission delay related to a sensing signal.

5. The method of any of claims 1 to 4, wherein the configuration information further carries a unit associated with the feedback region.

6. The method of any of claims 1 to 4, wherein the configuration information further carries a data partitioning granularity in the feedback region, and the data partitioning granularity indicates a partitioning granularity of sensing signals or echo signals in the feedback region that are combined into a same feedback information for feedback.

7. The method of claim 1, wherein the feedback quantity precision indicates a precision corresponding to a feedback information carried in the sensing feedback; and
parsing the sensing feedback based on the configuration information for the sensing feedback comprises:
parsing the feedback information that meets the feedback quantity precision from the sensing feedback.

8. The method of any of claims 1 to 7, wherein the configuration information is related to at least one of: a sensing service requirement or a resource overhead required for the sensing feedback.

9. A configuration method based on a sensing scenario, performed by a second node, and comprising:
receiving a configuration information for sensing feedback, wherein the configuration information for the sensing feedback is used for configuring at least one of a feedback region or a feedback quantity precision for transmitting the sensing feedback by the second node; and
transmitting the sensing feedback based on the configuration information for the sensing feedback.

10. The method of claim 9, wherein the feedback region indicates a region corresponding to a feedback information carried in the sensing feedback; and
transmitting the sensing feedback based on the configuration information for the sensing feedback comprises:
transmitting the sensing feedback that carries the feedback information corresponding to the feedback region.

11. The method of claim 10, wherein the feedback region comprises at least one of:
a spherical region with a first node as a center and a radius of R;
a spatial region in a coordinate system with the first node as an origin;
a fan-shaped open region with the first node as a vertex;
a fan-shaped closed region with the first node as a vertex;
a spherical region with the second node as a center and a radius of R;
a spatial region in a coordinate system with the second node as an origin;
a fan-shaped open region with the second node as a vertex;
a fan-shaped closed region with the second node as a vertex;
a spherical region with a sensing target as a center and a radius of R;
a spatial region in a coordinate system with the sensing target as an origin;
a fan-shaped open region with the sensing target as a vertex;
a fan-shaped closed region with the sensing target as a vertex; or
a spatial region determined based on a time difference between transmitting and receiving of a sensing signal.

12. The method of claim 10, wherein the feedback region is represented by at least one of:
coordinates in a coordinate system with a first node as an origin;
coordinates in a coordinate system with the second node as an origin;
coordinates in a reference coordinate system with a reference node as an origin, the reference node being different from the first node and the second node;
an angle of incidence with the first node as a vertex;
an angle of departure with the first node as a vertex;
an angle of incidence with the second node as a vertex;
an angle of departure with the second node as a vertex;
a line between the first node and the second node;
a length value related to a sensing distance;
an angle value related to a sensing angle; or
a transmission delay related to a sensing signal.

13. The method of any of claims 9 to 12, wherein the configuration information further carries a unit associated with the feedback region.

14. The method of any of claims 9 to 12, wherein the configuration information further carries a data partitioning granularity in the feedback region, and the data partitioning granularity indicates a partitioning granularity of sensing signals or echo signals in the feedback region that are combined into a same feedback information for feedback.

15. The method of claim 9, wherein the feedback quantity precision indicates a precision corresponding to a feedback information carried in the sensing feedback; and
transmitting the sensing feedback based on the configuration information for the sensing feedback comprises:
transmitting the sensing feedback carrying the feedback information that meets the feedback quantity precision.

16. The method of any of claims 9 to 15, wherein the configuration information is related to at least one of: a sensing service requirement or a resource overhead required for the sensing feedback.

17. A configuration apparatus based on a sensing scenario, comprising:
a transmitting module, configured to transmit a configuration information for sensing feedback, wherein the configuration information for the sensing feedback is used for configuring at least one of a feedback region or a feedback quantity precision for transmitting the sensing feedback by a second node; and
a parsing module, configured to parse the sensing feedback based on the configuration information for the sensing feedback.

18. A configuration apparatus based on a sensing scenario, comprising:
a receiving module, configured to receive a configuration information for sensing feedback, wherein the configuration information for the sensing feedback is used for configuring at least one of a feedback region or a feedback quantity precision for transmitting the sensing feedback by a second node; and
a transmitting module, configured to transmit the sensing feedback based on the configuration information for the sensing feedback.

19. A sensing device, comprising:
a transceiver, configured to transmit a configuration information for sensing feedback, wherein the configuration information for the sensing feedback is used for configuring at least one of a feedback region or a feedback quantity precision for transmitting the sensing feedback by a second node; and
a processor, configured to parse the sensing feedback based on the configuration information for the sensing feedback.

20. A sensing device, comprising:
a transceiver, configured to:
receive a configuration information for sensing feedback, wherein the configuration information for the sensing feedback is used for configuring at least one of a feedback region or a feedback quantity precision for transmitting the sensing feedback by a second node; and
transmit the sensing feedback based on the configuration information for the sensing feedback.

21. A computer-readable storage medium having stored thereon a computer program that, when executed by a processor, causes a sensing device to implement the configuration method based on the sensing scenario of any of claims 1 to 8, or to implement the configuration method based on the sensing scenario of any of claims 9 to 16.

22. A chip, comprising: a programmable logic circuit and/or program instructions, wherein when the chip is operated, the configuration method based on the sensing scenario of any of claims 1 to 8 is implemented, or the configuration method based on the sensing scenario of any of claims 9 to 16 is implemented.

23. A computer program product, comprising computer instructions stored in a computer-readable storage medium, wherein the computer instructions are read from the computer-readable storage medium and executed by a processor to cause a sensing device to implement the configuration method based on the sensing scenario of any of claims 1 to 8, or to implement the configuration method based on the sensing scenario of any of claims 9 to 16.

24. A computer program, comprising computer instructions stored in a computer-readable storage medium, wherein the computer instructions are read from the computer-readable storage medium and executed by a processor to cause a sensing device to implement the configuration method based on the sensing scenario of any of claims 1 to 8, or to implement the configuration method based on the sensing scenario of any of claims 9 to 16.
